# FASCICULE DE BREVET EUROPEEN

(11) **EP 4 320 015 B1**
(45) Date de publication et mention de la délivrance du brevet: **13.08.2025**
(21) Numéro de dépôt: 22713989.6
(22) Date de dépôt: 15.03.2022
(51) Int. Cl.: B60R 7/06

(54) **DISPOSITIF SUPPORT D'OBJETS POUR PLANCHE DE BORD DE VÉHICULE AUTOMOBILE**
VORRICHTUNG ZUM TRAGEN VON GEGENSTÄNDEN FÜR DAS ARMATURENBRETT EINES KRAFTFAHRZEUGES
OBJECT SUPPORT DEVICE FOR A MOTOR VEHICLE DASHBOARD

(30) Priorité: 10.04.2021 FR 2104052
(43) Date de publication de la demande: 14.02.2024
(73) Titulaire: Stellantis Auto SAS, 78300 Poissy (FR)
(72) Inventeur: GAUTHIER, Jean Pierre, 94800 VILLEJUIF (FR); DUTOT, Christophe, 78140 VELIZY VILLACOUBLAY (FR); KERVAREC, Florian, 91310 LONGPONT SUR ORGE (FR); DUVIVIER, Arnaud, 91190 GIF SUR YVETTE (FR); RICHEUX GUILLOUX, Nathalie, 91430 IGNY (FR)
(74) Mandataire: ESIP
(86) Numéro de dépôt international: PCT/FR2022/050466
(87) Numéro de publication internationale: WO 2022/223898

(56) Documents cités:
- US-A1- 2008 099 521
- US-A1- 2009 224 016
- US-A1- 2014 246 468
- US-A1- 2019 263 326

## Description

### [Domaine technique]

L'invention concerne d'une manière générale les dispositifs support d'un ou plusieurs objets dans l'habitacle d'un véhicule automobile.

Elle vise en particulier un tel dispositif support prévu pour être monté au dessus de la planche de bord d'un tel véhicule automobile.

### [Technique antérieure]

Les passagers des véhicules notamment de type automobile sont de plus en plus demandeurs d'espaces internes de rangement aptes à recevoir toutes sortes d'objets ou accessoires, tels que par exemple des lunettes de soleil, des dispositifs électroniques de type Smartphones ou tablettes, des gobelets, des bouteilles, des cartes et/ou documents, des stylos, des pièces etc...

Des dispositifs de rangement de type boîte à gants ou vide-poches sont généralement implantés dans la planche de bord et/ou les garnitures d'habillage des portes latérales du véhicule afin d'accueillir certains de ces objets ou accessoires.

De par leur implantation, de tels espaces de rangements ne permettent pas au conducteur (voire au passager avant) d'utiliser les objets y étant disposés durant les trajets.

On connait également, en particulier des documents WO 2014/095613 A1 et FR 2 804 916 A1, des dispositifs support rapportables de manière amovible sur la planche de bord du véhicule ou sur une bouche d'aération du système de ventilation et prévus par exemple pour l'accueil d'un appareil électronique nomade de type Smartphone ou tablette ou bien d'un récipient tel qu'un gobelet ou une canette.

Il est également connu, notamment de la demande de brevet internationale WO 2006/095064, des dispositifs supports pour de tels appareils électroniques nomades comprenant un bloc support de l'appareil électronique, une ventouse de fixation sur le pare-brise avant du véhicule automobile, ainsi qu'un bras de liaison entre le bloc support et la ventouse. Un tel dispositif support comporte également une articulation constituée par une rotule de liaison disposée entre le bras et le moyen de fixation : cette rotule permettant d'orienter le bloc support et donc l'appareil électronique portable selon les souhaits de l'utilisateur.

On connait également du document US20090224016 A1 un dispositif qui se fixe au cadre du pare-brise d'un chariot de golf ou d'un véhicule tout terrain utilisé comme dispositif de montage sécurisé pour un appareil de chauffage au propane et une bouteille de propane.

Tous ces dispositifs rapportés s'intègrent souvent mal à l'habitacle du véhicule et nuisent sensiblement au niveau de qualité perçue par les utilisateurs, en particulier lorsqu'ils ne reçoivent aucun objet ou lorsqu'ils sont reliés via un câble d'alimentation particulièrement disgracieux à la prise allume cigare du véhicule pour alimenter un appareil électronique.

Par ailleurs, le nombre d'emplacements d'accueil permettant l'installation de ces dispositifs support rapportés étant limité dans la partie avant de l'habitacle, les passagers des sièges avant n'ont pas la possibilité d'avoir à portée de mains l'ensemble des objets ou accessoires qu'ils souhaiteraient utiliser durant le trajet du véhicule.

Cette problématique concerne particulièrement les véhicules dotés de modes d'assistance à la conduite aptes à délester entièrement le conducteur dans certaines situations (par exemple lorsque le véhicule circule sur des routes à chaussées séparées) de sorte que le conducteur n'est pas tenu de garder les yeux fixés sur la route et peut vaquer à d'autres occupations (passage de communications téléphoniques, visionnage d'un film, lancement d'un jeu vidéo sur un ordinateur ou une tablette tactile, lecture d'un livre ou d'un magazine, etc...).

### [Exposé de l'invention]

La présente invention vise donc à améliorer la situation.

Elle propose à cet effet un ensemble support pour habitacle de véhicule automobile, comportant au moins un dispositif support comprenant des moyens de support pour au moins un objet ou accessoire comportant également une barre rigide d'accueil dotée d'un corps tubulaire et prévue pour s'étendre transversalement le long et au-dessus de la planche de bord dudit véhicule, chaque au moins dit dispositif support comprenant en outre des moyens d'attache permettant d'assurer son montage de manière amovible sur ladite barre d'accueil, caractérisé en ce que la face extérieure dudit corps tubulaire présente une lamelle électriquement conductrice de masse s'étendant le long de ladite barre d'accueil et au moins une lamelle électriquement conductrice d'alimentation s'étendant le long de ladite barre d'accueil à l'écart de ladite lamelle de masse et apte à délivrer une tension continue d'alimentation, un au moins dit dispositif support comportant des moyens d'alimentation électrique comprenant une piste électriquement conductrice de masse et une piste électriquement conductrice d'alimentation ménagées sur lesdits moyens d'attache et étant reliées chacune par un conducteur respectif à une borne correspondante d'un connecteur d'alimentation électrique, lesdites pistes de masse et d'alimentation étant en outre aptes à venir en contact respectivement avec ladite lamelle de masse et avec une dite lamelle d'alimentation lorsque ledit dispositif support est monté sur ladite barre d'accueil .

En prévoyant un nombre adéquat de dispositifs support montés de manière amovibles sur la barre d'accueil, l'ensemble support selon l'invention permet ainsi, aux passagers avant d'un véhicule automobile de positionner librement, à portée de leurs mains et sur toute la largeur de la planche de bord, une multitude d'objets et/ou d'accessoires, qu'ils pourront ensuite utiliser lors des trajets effectués par ce véhicule.

Selon des caractéristiques préférées dudit ensemble support selon l'invention :
- la face extérieure dudit corps tubulaire présente plusieurs dites lamelles d'alimentation écartées les unes des autres et aptes à délivrer différentes tensions continues d'alimentation ;
- la ou lesdites tensions continues d'alimentation délivrées par la ou lesdites lamelles d'alimentation sont inférieures ou égale à 10 volts ;
- ledit corps tubulaire de la barre d'accueil comporte un substrat thermoplastique électriquement isolant sur la face extérieure duquel lesdites lamelles d'alimentation sont intégrées par un procédé plastronique ;
- ladite barre d'accueil comporte également une excroissance d'indexage saillant radialement vers l'extérieur et le long dudit corps tubulaire, les deux faces extérieures de ladite excroissance étant aptes à coopérer chacune en butée un élément correspondant des moyens d'attache de chaque dit dispositif support de sorte à verrouiller son positionnement angulaire vis-à-vis de ladite barre d'accueil ;
- lesdits moyens d'attache de chaque dispositif support comportent une pince comportant deux branches allongées agencées en vis-à-vis l'une de l'autre et reliées par un ressort de sorte à pourvoir pivoter l'une par rapport à l'autre autour d'un axe perpendiculaire à leurs directions d'allongement respectives, lesdites branches comprenant des portions de serrage définissant des mâchoires aptes à enserrer ledit corps tubulaire pour assurer la fixation d'un dit dispositif support sur ladite barre d'accueil ;
- lesdites branches sont venues chacune de moulage à partir d'un polymère thermoplastique électriquement isolant ; et/ou
- lesdites pistes de masse et d'alimentation sont intégrées chacune par un procédé plastronique au niveau de la mâchoire d'une branche correspondante de ladite pince.

L'invention vise également sous un second aspect, un véhicule automobile comportant un tel ensemble support.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue simplifiée en perspective de la partie avant de l'habitacle d'un véhicule automobile comportant un ensemble support pour objets selon l'invention comportant une barre d'accueil s'étendant transversalement le long et au dessus de la planche de bord de ce véhicule et plusieurs dispositifs support montés fixement de manière amovible sur cette barre d'accueil ;
[Fig 2] est une vue simplifiée en perspective illustrant la fixation d'une extrémité de la barre d'accueil de l'ensemble support selon l'invention à la structure du véhicule ;
[Fig 3] représente une vue agrandie en coupe et en perspective de la barre d'accueil de l'ensemble support de la figure 1 ;
[Fig 4] est une vue agrandie en perspective de l'un des dispositifs support monté fixement de manière amovible sur ladite barre d'accueil de l'ensemble support de la figure 1 ;
[Fig 5] représente une vue agrandie en perspective de la pince d'attache de l'un des dispositifs support pour appareil électronique pourvu de moyens d'alimentation électrique destinés à permettre le rechargement dudit appareil ; et
[Fig 6] est une vue agrandie en perspective sous un autre angle de la pince d'attache de la figure 5.

### [Description détaillée]

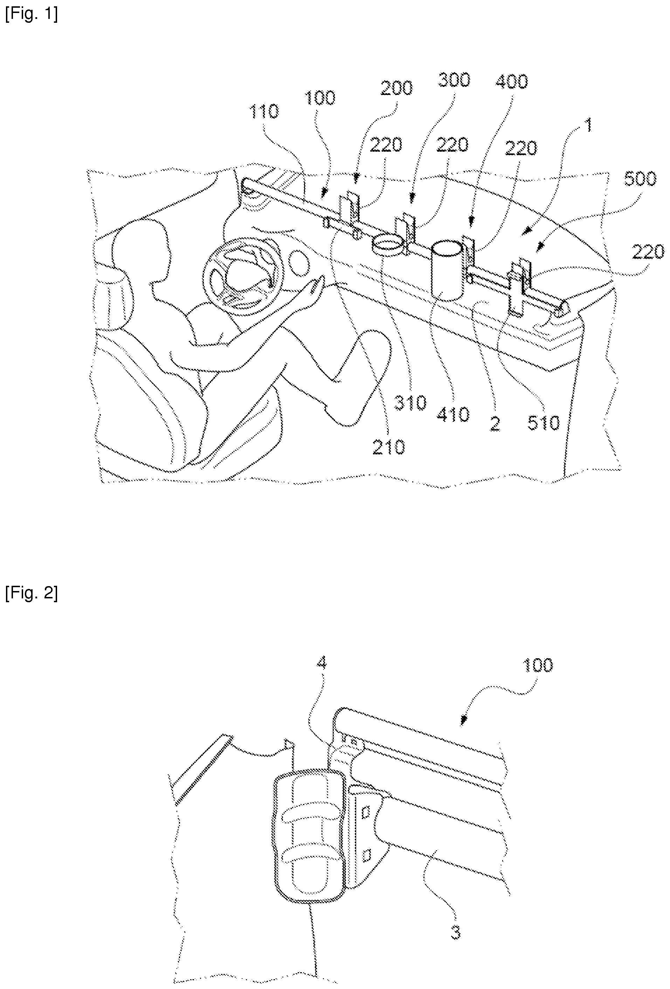

La figure 1 représente une vue simplifiée de la partie avant de l'habitacle d'un véhicule automobile comportant un ensemble support 1 selon l'invention, destiné à recevoir divers objets et/ou accessoires.

Dans la description qui va suivre et par convention, les termes « avant », « arrière », « inférieur », « supérieur », « longitudinal » et « transversal » seront définis par rapport à la position de montage d'un ensemble support dans le véhicule.

En référence à cette figure 1, l'ensemble support 1 comporte une barre rigide d'accueil 100 prévue pour s'étendre transversalement le long et au-dessus de la planche de bord 2 du véhicule, ainsi qu'au moins un dispositif support 200, 300, 400, 500 pour un ou plusieurs objets ou accessoires monté fixement de manière amovible sur cette barre d'accueil 100.

Tel qu'illustré sur la figure 2, chaque extrémité de cette barre rigide d'accueil 100 est destinée à être fixée rigidement à une extrémité respective de la traverse de planche de bord 3 du véhicule par l'intermédiaire d'une bride de liaison correspondante 4.

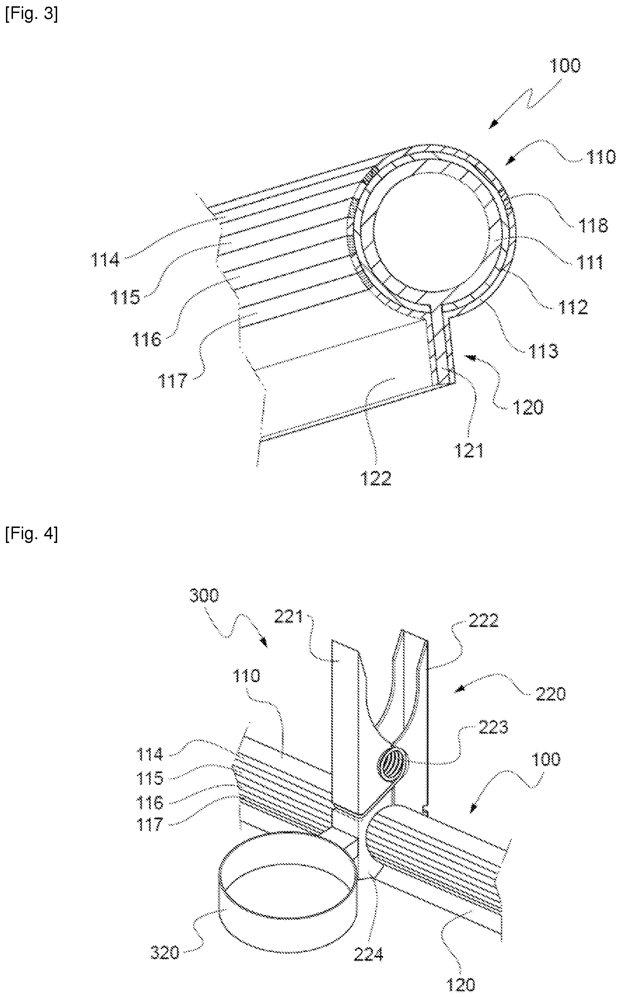

En référence à la figure 3, la barre d'accueil 100 comporte un corps tubulaire 110 doté d'une armature tubulaire métallique 111 recouverte d'un substrat thermoplastique électriquement isolant 112 (par exemple en polychlorure de vinyle ou PVC), ce dernier étant revêtu avantageusement d'une couche 113 de vernis anti-rayures.

Le corps tubulaire 110 de la barre 100 présente sur la portion arrière de sa face extérieure quatre lamelles électriquement conductrices d'alimentation 114, 115, 116, 117 s'étendant de manière étagée les unes au dessus et à l'écart des autres sur toute la longueur de cette barre 100.

Ce corps tubulaire 110 présente en outre sur la portion avant de sa face extérieure une lamelle électriquement conductrice de masse 118 s'étendant également sur toute la longueur de la barre 100.

Réalisées avantageusement en cuivre, ces lamelles conductrices 114, 115, 116, 117, 118 sont de préférence intégrées sur la face extérieure du substrat isolant 112 par un procédé plastronique, plus couramment désigné sous l'acronyme anglophone MID (pour « Molded Interconnect Device »).

En variante, ces lamelles peuvent également être apposées sur la face extérieure du substrat 112 par collage ou soudage à ultrasons.

Les lamelles conductrices d'alimentation 114, 115, 116, 117 sont aptes à délivrer différentes tensions continues d'alimentation avantageusement inférieures ou égales à 10 volts (de sorte à ne représenter aucun danger pour les passagers du véhicule en cas de contact avec la barre 100) et adaptées à différents types d'appareils électroniques (par exemple, 4,5 V pour la lamelle 114, 5 V pour la lamelle 115, 6 V pour la lamelle 116 et 9 V pour la lamelle 117).

Pour ce faire, elles sont reliées, par exemple via un faisceau de câbles électriques et une carte à circuits imprimés de type PCB (pour « Printed Circuit Board » en langue anglaise) non visible sur les figures et intercalée entre l'une des extrémités de la barre100 et la bride de liaison 4 correspondante, à un convertisseur de courant continu intégré par exemple au boîtier servitude intelligent (BSI) du véhicule et apte à convertir la tension de la batterie de ce véhicule en 12V en différentes tensions continues d'alimentation adaptées.

Réalisée également de manière avantageuse en cuivre, la lamelle conductrice de masse 118 est reliée, par exemple via un câble électrique et ladite carte à circuits imprimés, à une prise de masse du véhicule constituée par exemple par un goujon ou un écrou métallique soudé sur l'une des tôles de la structure de caisse du véhicule.

Une pastille isolante est en outre avantageusement intercalée entre la seconde extrémité de la barre 100 et la bride de liaison métallique correspondante 4 afin d'éviter tout risque de court-circuit.

Cette barre d'accueil 100 comporte également une excroissance d'indexage 120 à section en I saillant radialement vers le bas depuis la face extérieure de son corps tubulaire 110 et sur toute la longueur de ce dernier.

Cette excroissance 120 est dotée d'une armature métallique 121 dont l'extrémité supérieure est fixée par des points de soudure à celle 111 du corps tubulaire 110, cette armature 121 étant avantageusement revêtue d'une couche 122 de vernis anti-rayures.

Tel qu'illustré sur la figure 1, chacun des dispositifs support 200, 300, 400, 500 comporte des moyens de supports pour au moins un objet ou accessoire 210, 310, 410, 510 ainsi que des moyens d'attache 220 permettant d'assurer sa fixation de manière amovible sur la barre d'accueil 10.

Destinés à supporter fixement un appareil électronique de type Smartphone, les moyens de supports 210 du dispositif 200 comportent par exemple deux cales mobiles de serrage à écartement transversal réglable aptes à enserrer latéralement ledit appareil.

Prévus pour supporter un récipient tel qu'un gobelet ou une canette, les moyens de supports 310 du dispositif 300 comportent par exemple un anneau de réception définissant une ouverture de passage pour ledit récipient.

Destinés à recevoir par exemple des crayons, stylos, lunettes et autres objets divers, les moyens de supports 410 du dispositif 400 comportent par exemple un réceptacle cylindrique de type pot à crayons.

Prévus pour supporter fixement un appareil électronique de type tablette, les moyens de supports 510 du dispositif 500 comportent par exemple deux cales mobiles de serrage à écartement transversal réglable aptes à enserrer latéralement ledit appareil ainsi que deux autres cales mobiles de serrage à écartement vertical réglable aptes à enserrer verticalement ledit appareil.

Les moyens d'attache de chacun ces dispositifs supports 200, 300, 400, 500 sont identiques et constitués en l'espèce par une pince 220 de type « pince à linge ».

En référence à la figure 4 montrant le dispositif support 300 en configuration montée sur la barre d'accueil 100, cette pince 220 comporte une première branche allongée 221 et une seconde branche allongée 222 agencées en vis-à-vis l'une de l'autre et reliées par un ressort 223, de sorte à pourvoir pivoter l'une par rapport à l'autre autour d'un axe perpendiculaire à leurs directions d'allongement respectives.

Ces deux branches 221, 222 sont avantageusement venues chacune de moulage à partir d'un polymère thermoplastique électriquement isolant tel que le Polypropylène (PP), le polyamide (PA) ou le Polyacétal (POM) renforcé éventuellement en fibres naturelles et/ou synthétiques.

Les moyens de supports 210, 310, 410, 510 de chaque dispositif 200, 300, 400, 500 sont portés à demeure ou de manière amovible par la face extérieure de l'une des branches 221, 222 de la pince 220.

De manière avantageuse et afin de réduire les coûts de fabrication et d'améliorer la résistance mécanique des dispositifs supports, leurs moyens de support sont au moins partiellement réalisés d'une seule pièce avec l'une des branches 221, 222 de la pince 220.

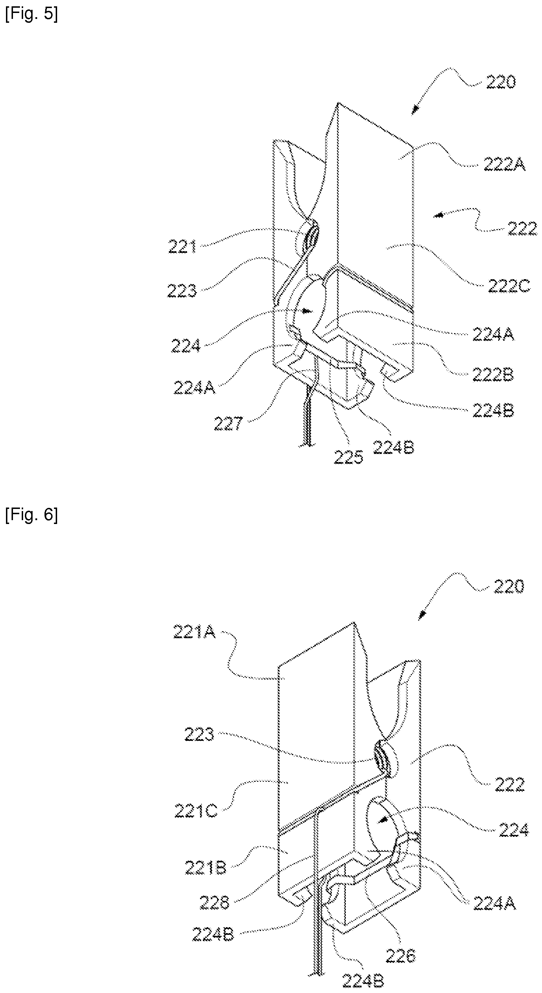

En référence aux figures 5 et 6 représentant des vues agrandies d'une pince 220 seule sous deux angles de vue différents, chaque branche 221, 222 comprend une portion de préhension 221A, 222A, une portion de serrage 221B, 222B définissant une mâchoire 224 pourvue de deux mors latéraux 224A, 224B de forme et de dimension complémentaires à celles du corps tubulaire 110 de la barre d'accueil 100, ainsi qu'une portion intermédiaire 221C, 222C reliant ces portions de préhension et de serrage.

En l'absence de sollicitation extérieure, la pince 220 est apte à occuper une position fermée de serrage dans laquelle ses deux portions de serrage 221B, 222B sont maintenues au contact l'une de l'autre par la force de rappel exercée par le ressort 223.

Sous l'effet d'une pression manuelle simultanée sur les portions de préhension 221A, 222A tendant à les rapprocher l'une de l'autre à l'encontre de la force de rappel du ressort 223, la pince 220 est apte à venir occuper une position ouverte dans laquelle ses deux portions de serrage 221B, 222B sont écartées.

Pour mettre en place un dispositif support tel que 200, 300, 400 ou 500 sur la barre d'accueil 100, l'un de passagers avant du véhicule doit tout d'abord pincer les portions de préhension 221A, 222A des deux branches 221, 222 de sa pince 220, de sorte à la maintenir en position ouverte.

Il doit ensuite positionner cette pince 220 à l'aplomb du corps tubulaire 110 de la barre d'accueil 100, puis la faire coulisser vers le bas jusqu'à ce que les mâchoires 224 des portions de serrage 221B, 222B entourent ce corps 110. Le passager peut alors relâcher la pince 220 de sorte à provoquer sa fermeture et le serrage du corps 110 de la barre 100 entre les mâchoires 224 de la pince 220.

En référence à la figure 4, on remarquera que les bords intérieurs des extrémités inférieures des mors latéraux 224A, 224B de chaque mâchoire 224 de la pince 220 reposent en butée contre une face correspondante de l'excroissance d'indexage 120 de la barre d'accueil 100, de sorte à garantir le maintien du dispositif support dans une position prédéfinie d'utilisation en évitant tout risque de rotation intempestif de ce dernier autour de cette barre 10.

Les dispositifs supports 200 et 500 prévus pour supporter des appareils électroniques comportent en outre des moyens d'alimentation électrique destinés à permettre le rechargement de ces appareils électroniques dans le véhicule.

Tel qu'illustré sur les figures 5 et 6, ces moyens d'alimentation électriques comportent :
- une piste électriquement conductrice d'alimentation 225 s'étendant entre les deux mors latéraux de la mâchoire 224 de la première branche 221 de la pince 220, de sorte à venir en contact avec une lamelle conductrice d'alimentation correspondante 114, 115, 116 ou 117 de la barre d'accueil 100 lorsque le dispositif support 200, 500 est monté sur cette dernière ;
- une piste électriquement conductrice de masse 226 s'étendant entre les deux mors latéraux de la mâchoire 224 de la seconde branche 222 de la pince 220, de sorte à venir en contact avec la lamelle conductrice de masse 118 de la barre d'accueil 100 lorsque le dispositif support 200, 500 est monté sur cette dernière ;
- un connecteur d'alimentation électrique non représenté (par exemple, de type USB femelle) et agencé sur les moyens de support 210, 510 ; et
- un câble électrique de liaison comprenant un premier conducteur 227 reliant la piste électriquement conductrice d'alimentation 225 à une première borne de ce connecteur, et un second conducteur 228 reliant, via le ressort 223, la piste électriquement conductrice de masse 226 à une seconde borne de ce connecteur.

Réalisées avantageusement en cuivre, les pistes conductrices 225, 226 sont de préférence intégrées chacune sur une branche respective 221, 222 de la pince 220, au niveau des mâchoires 224, et par un procédé plastronique, plus couramment désigné sous l'acronyme anglophone MID (pour « Molded Interconnect Device »).

En variante, ces pistes 225, 226 peuvent également être apposées sur les banches 221, 222 de la pince 220 par collage ou soudage à ultrasons.

On remarquera également que la coopération en butée des bords intérieurs des extrémités inférieures des mors latéraux 224A, 224B de chaque mâchoire 224 de la pince 220 avec une face correspondante de l'excroissance 120 de la barre d'accueil 100 permet de garantir le maintien du contact électrique d'une part entre la piste d'alimentation 225 et la lamelle d'alimentation correspondantes 114, 115, 116 ou 117, et d'autre part entre la piste de masse 226 et la lamelle de masse 118.

Selon des variantes de réalisation non représentées, l'armature du corps tubulaire de la barre d'accueil peut être réalisée dans un matériau thermoplastique tel que le Polypropylène (PP), le polyamide (PA) ou le Polyacétal (POM) renforcé éventuellement en fibres naturelles et/ou synthétiques. Une telle armature étant isolante électriquement, ce corps tubulaire est alors dépourvu du substrat électriquement isolant.

Selon d'autres variantes de réalisation non représentées, le nombre et la conformation des dispositifs support peuvent être différents.

Les moyens d'attache de chaque dispositif support peuvent par exemple être constitués de clips élastiquement déformables aptes à venir s'encliqueter de manière amovible sur la barre d'accueil.

Les moyens de support peuvent également être conformés différemment afin de s'adapter à d'autres types d'objets et/ou d'accessoires.

Selon encore d'autres variantes de réalisation non représentées, la barre d'accueil peut présenter un nombre différent de lamelles d'alimentation (par exemple, un, deux ou trois) et les voltages d'alimentation associés peuvent également différer.

## Revendications

1. Ensemble support (1) pour habitacle de véhicule automobile, comportant au moins un dispositif support (200 ; 300 ; 400 ; 500) comprenant des moyens de support (210 ; 310 ; 410 ; 510) pour au moins un objet ou accessoire ; comportant également une barre rigide d'accueil (100) dotée d'un corps tubulaire (110) et prévue pour s'étendre transversalement le long et au-dessus de la planche de bord (2) dudit véhicule, chaque au moins dit dispositif support (200 ; 300 ; 400 ; 500) comprenant en outre des moyens d'attache (220) permettant d'assurer son montage de manière amovible sur ladite barre d'accueil (100), **caractérisé en ce que** la face extérieure dudit corps tubulaire (110) présente une lamelle électriquement conductrice de masse (118) s'étendant le long de ladite barre d'accueil (100) et au moins une lamelle électriquement conductrice d'alimentation (114, 115, 116, 117) s'étendant le long de ladite barre d'accueil (100) à l'écart de ladite lamelle de masse (118) et apte à délivrer une tension continue d'alimentation, un au moins dit dispositif support (200 ; 500) comportant des moyens d'alimentation électrique comprenant une piste électriquement conductrice de masse (226) et une piste électriquement conductrice d'alimentation (225) ménagées sur lesdits moyens d'attache (220) et étant reliées chacune par un conducteur respectif (228, 227) à une borne correspondante d'un connecteur d'alimentation électrique, lesdites pistes de masse (226) et d'alimentation (225) étant en outre aptes à venir en contact respectivement avec ladite lamelle de masse (118) et avec une dite lamelle d'alimentation (114, 115, 116 ou 117) lorsque ledit dispositif support (200 ; 500) est monté sur ladite barre d'accueil (100).

2. Ensemble support (1) selon la revendication 1, **caractérisé en ce que** la face extérieure dudit corps tubulaire (110) présente plusieurs dites lamelles d'alimentation (114, 115, 116, 117) écartées les unes des autres et aptes à délivrer différentes tensions continues d'alimentation.

3. Ensemble support (1) selon l'une des revendications 1 ou 2, **caractérisé en ce que** la ou lesdites tensions continues d'alimentation délivrées par la ou lesdites lamelles d'alimentation (114, 115, 116, 117) sont inférieures ou égale à 10 volts.

4. Ensemble support (1) selon l'une des revendications 1 à 3, **caractérisé en ce que** ledit corps tubulaire (110) de la barre d'accueil (100) comporte un substrat thermoplastique électriquement isolant (112) sur la face extérieure duquel lesdites lamelles d'alimentation (114, 115, 116, 117) sont intégrées par un procédé plastronique.

5. Ensemble support (1) selon l'une des revendications 1 à 4, **caractérisé en ce que** ladite barre d'accueil (100) comporte également une excroissance d'indexage (120) saillant radialement vers l'extérieur et le long dudit corps tubulaire (110), les deux faces extérieures de ladite excroissance (120) étant aptes à coopérer chacune en butée un élément correspondant (224) des moyens d'attache (220) de chaque dit dispositif support (200 ; 300 ; 400 ; 500) de sorte à verrouiller son positionnement angulaire vis-à-vis de ladite barre d'accueil (100).

6. Ensemble support (1) selon l'une des revendications 1 à 5, **caractérisé en ce que** lesdits moyens d'attache de chaque dispositif support (200 ; 300 ; 400 ; 500) comportent une pince (220) comportant deux branches allongées (221, 222) agencées en vis-à-vis l'une de l'autre et reliées par un ressort (223) de sorte à pourvoir pivoter l'une par rapport à l'autre autour d'un axe perpendiculaire à leurs directions d'allongement respectives, lesdites branches (221, 222) comprenant des portions de serrage (221B, 222B) définissant des mâchoires (224) aptes à enserrer ledit corps tubulaire (110) pour assurer la fixation d'un dit dispositif support (200 ; 300 ; 400 ; 500) sur ladite barre d'accueil (100).

7. Ensemble support (1) selon la revendication 6, **caractérisé en ce que** lesdites branches (221, 222) sont venues chacune de moulage à partir d'un polymère thermoplastique électriquement isolant.

8. Ensemble support (1) selon les revendications 1 et 7, **caractérisé en ce que** lesdites pistes de masse (226) et d'alimentation (225) sont intégrées chacune par un procédé plastronique au niveau de la mâchoire d'une branche correspondante (221, 222) de ladite pince (220).

9. Véhicule automobile comportant un ensemble support (1) selon l'une des revendications 1 à 8.

## Patentansprüche

1. Stützvorrichtung (1) für den Fahrgastraum eines Kraftfahrzeugs, umfassend mindestens eine Stützvorrichtung (200; 300; 400; 500) mit Stützmitteln (210; 310; 410; 510) für mindestens einen Gegenstand oder Zubehör; ebenfalls umfassend eine starre Landestange (100) mit einem rohrförmigen Körper (110), die sich quer entlang und über die Instrumententafel (2) des Fahrzeugs erstreckt, jede mindestens die Stützvorrichtung (200; 300; 400; 500) ebenfalls mit Befestigungsmitteln (220) umfasst, die es ermöglichen, sie abnehmbar an der Andockstange (100) zu montieren, **dadurch gekennzeichnet, dass** die Außenseite des rohrförmigen Körpers (110) eine elektrisch erdleitende Lamelle (118) aufweist, die sich entlang der Andockstange (100) erstreckt, und mindestens eine elektrisch leitende Versorgungslamelle (114, 115, 116, 117), die sich entlang der Andockstange (100) von der Erdungsleiste (118) weg erstreckt und in der Lage ist, eine Gleichstromversorgungsspannung zu liefern, mindestens eine Stützvorrichtung (200; 500), die ein elektrisches Versorgungsmittel umfasst, das eine elektrisch erdleitende Schiene (226) und eine elektrisch leitende Stromschiene (225) umfasst, die auf den Befestigungsmitteln (220) vorgesehen sind und jeweils durch einen jeweiligen Leiter (228) verbunden sind, S. 227) an einem entsprechenden Anschluss eines Stromversorgungssteckers, wobei die Erdungs- (226) und die Stromversorgungsschienen (225) weiterhin in der Lage sind, mit der Erdungsklinge (118) bzw. mit der Energieklinge (114, 115, 116 oder 117) in Kontakt zu kommen, wenn die Stützvorrichtung (200; 500) an der Andockleiste (100) montiert ist.

2. Stützanordnung (1) nach Anspruch 1, **dadurch gekennzeichnet, dass** die Außenseite des Rohrkörpers (110) mehrere voneinander getrennte sogenannte Versorgungslamellen (114, 115, 116, 117) aufweist, die in der Lage sind, unterschiedliche Gleichstromversorgungsspannungen zu liefern.

3. Stützanordnung (1) nach einem der Ansprüche 1 oder 2, **dadurch gekennzeichnet, dass** die von den Versorgungslamellen (114, 115, 116, 117) gelieferte(n) DC-Versorgungsspannung(en) kleiner oder gleich 10 Volt sind.

4. Stützanordnung (1) nach einem der Ansprüche 1 bis 3, **dadurch gekennzeichnet, dass** der Rohrkörper (110) der Andockstange (100) ein elektrisch isolierendes thermoplastisches Substrat (112) aufweist, an dessen Außenseite die Versorgungslamellen (114, 115, 116, 117) durch ein plastronisches Verfahren integriert sind.

5. Stützanordnung (1) nach einem der Ansprüche 1 bis 4, **dadurch gekennzeichnet, dass** die Andockstange (100) auch einen radial nach außen und entlang des Rohrkörpers (110) vorstehenden Indexvorsprung (120) aufweist, wobei die beiden Außenflächen des Vorsprungs (120) jeweils in der Lage sind, beim Anhalten eines entsprechenden Elements (224) der Befestigungsmittel (220) jeder Stützvorrichtung (200; 300; 400; 500) zusammenzuwirken, um dessen Positionierung zu verriegeln gegenüber der Hausbar (100).

6. Stützanordnung (1) nach einem der Ansprüche 1 bis 5, **dadurch gekennzeichnet, dass** die Befestigungsmittel jeder Stützvorrichtung (200; 300; 400; 500) eine Klemme (220) umfassen, die zwei längliche, einander gegenüberliegende und durch eine Feder (223) verbundene längliche Äste (221, 222) umfasst, um sich zueinander um eine Achse senkrecht zu ihren jeweiligen Dehnungsrichtungen drehen zu können, die Arme (221, 222) umfassen Klemmabschnitte (221B, 222B), die Backen (224) definieren, die in der Lage sind, den Rohrkörper (110) zu umschließen, um die Befestigung der Stützvorrichtung (200; 300; 400; 500) an der Andockstange (100) sicherzustellen.

7. Stützanordnung (1) nach Anspruch 6, **dadurch gekennzeichnet, dass** die Gliedmaßen (221, 222) jeweils aus einem elektrisch isolierenden thermoplastischen Polymer geformt sind.

8. Stützanordnung (1) nach den Ansprüchen 1 und 7, **dadurch gekennzeichnet, dass** der Boden (226) und die Versorgungsschienen (225) jeweils durch ein plastronisches Verfahren an der Backe eines entsprechenden Astes (221, 222) der Pinzette (220) integriert sind.

9. Kraftfahrzeug mit einer Stützanordnung (1) nach einem der Ansprüche 1 bis 8.

## Claims

1. A support assembly (1) for the passenger compartment of a motor vehicle, comprising at least one support device (200; 300; 400; 500) comprising support means (210; 310; 410; 510) for at least one object or accessory; also comprising a rigid landing bar (100) having a tubular body (110) and provided to extend transversely along and above the instrument panel (2) of said vehicle, each at least said support device (200; 300; 400; 500) also comprising means of attachment (220) enabling it to be removably mounted on said docking bar (100), **characterized in that** the outer face of said tubular body (110) has an electrically ground-conducting lamella (118) extending along said docking bar (100) and at least one electrically conductive supply lamella (114, 115, 116, 117) extending along said docking bar (100) away from said ground slat (118) and capable of delivering a DC supply voltage, at least a support device (200; 500) comprising means of electrical supply comprising an electrically ground-conducting track (226) and an electrically conductive power track (225) provided on said means of attachment (220) and each connected by a respective conductor (228, 227) at a corresponding terminal of a power supply connector, said ground (226) and power (225) tracks being further capable of coming into contact with said ground blade (118) and with said power blade (114, 115, 116 or 117) respectively when said support device (200; 500) is mounted on said docking bar (100).

2. Support assembly (1) according to claim 1, **characterized in that** the outer face of said tubular body (110) has several so-called supply lamellae (114, 115, 116, 117) separated from each other and capable of delivering different DC supply voltages.

3. A support assembly (1) according to one of claims 1 or 2, **characterized in that** the said DC supply voltage(s) delivered by the said supply lamellae (114, 115, 116, 117) are less than or equal to 10 volts.

4. Support assembly (1) according to one of claims 1 to 3, **characterized in that** said tubular body (110) of the docking bar (100) comprises an electrically insulating thermoplastic substrate (112) on the outer face of which said supply slats (114, 115, 116, 117) are integrated by a plastronic process.

5. Support assembly (1) according to one of claims 1 to 4, **characterized in that** said docking bar (100) also comprises an indexing protrusion (120) projecting radially outwards and along said tubular body (110), the two outer faces of said protrusion (120) being capable of each cooperating in stopping a corresponding element (224) of the means of attachment (220) of each said support device (200; 300; 400; 500) so as to lock its positioning opposite said home bar (100).

6. Support assembly (1) according to one of claims 1 to 5, **characterized in that** said means of attachment of each support device (200; 300; 400; 500) comprise a clamp (220) comprising two elongated branches (221, 222) arranged opposite each other and connected by a spring (223) so as to be able to rotate one in relation to the other about an axis perpendicular to their respective directions of elongation, said arms (221, 222) comprising clamping portions (221B, 222B) defining jaws (224) capable of enclosing said tubular body (110) to ensure the attachment of said support device (200; 300; 400; 500) to said docking bar (100).

7. Support assembly (1) according to claim 6, **characterized in that** said limbs (221, 222) are each molded from an electrically insulating thermoplastic polymer.

8. Support assembly (1) according to Claims 1 and 7, **characterized in that** said ground (226) and supply tracks (225) are each integrated by a plastronic method at the jaw of a corresponding branch (221, 222) of said forceps (220).

9. A motor vehicle comprising a support assembly (1) according to one of Claims 1 to 8.
